# EUROPÄISCHE PATENTSCHRIFT

(11) **EP 3 048 431 B1**
(45) Veröffentlichungstag und Bekanntmachung des Hinweises auf die Patenterteilung: **29.07.2020**
(21) Anmeldenummer: 15195761.0
(22) Anmeldetag: 23.11.2015
(51) Int. Cl.: G01F 1/58

(54) **MAGNETISCH-INDUKTIVES DURCHFLUSSMESSGERÄT UND VERFAHREN ZUR HERSTELLUNG EINER MESSELEKTRODE**
MAGNETIC-INDUCTIVE FLOWMETER AND METHOD FOR PRODUCING A MEASURING ELECTRODE
DÉBITMÈTRE MAGNÉTO-INDUCTIF ET PROCÉDÉ DE FABRICATION D'UNE ÉLECTRODE DE MESURE

(30) Priorität: 20.01.2015 DE 102015000356; 01.10.2015 DE 102015116676
(43) Veröffentlichungstag der Anmeldung: 27.07.2016
(73) Patentinhaber: Krohne AG, 4019 Basel (CH)
(72) Erfinder: Beerling, Freek, 4826 HK Breda (NL); Heijnsdijk, Alexander Marnix, 3356 BW Papendrecht (NL); Neven, Josef, 26540 Mours St. Eusebe (FR); Nicolas, Christian, 26300 Chatuzange le Goubet (FR)
(74) Vertreter: Gesthuysen Patent- und Rechtsanwälte

(56) Entgegenhaltungen:
- EP-A1- 2 469 244
- DE-A1- 10 156 031
- US-A- 5 925 830
- US-A1- 2007 234 821

## Beschreibung

Die Erfindung betrifft ein magnetisch-induktives Durchflussmessgerät zur Durchflussmessung eines strömenden Mediums, mit einer Messleitung, mit einer Magnetfelderzeugungseinrichtung zur Erzeugung eines die Messleitung wenigstens teilweise durchsetzenden Magnetfeldes und mit mindestens einer Messelektrode zum Abgreifen einer in dem strömenden Medium induzierten Messspannung. Weiterhin bezieht sich die Erfindung auf ein Verfahren zum Herstellen einer Messelektrode, die insbesondere für ein magnetisch-induktives Durchflussmessgerät geeignet ist.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die meistens mindestens eine Magnetfeldspule aufweist, meistens ein während des Messvorgangs sich zeitlich veränderndes Magnetfeld erzeugt wird und das Magnetfeld wenigstens teilweise das durch die Messleitung strömende elektrisch leitfähige Medium durchsetzt. Dabei weist das Magnetfeld wenigstens eine Komponente senkrecht zur Längsachse der Messleitung bzw. senkrecht zur Strömungsrichtung des Mediums auf.

Zu magnetisch-induktiven Durchflussmessgeräten gehört mindestens eine die in dem elektrisch leitenden Medium induzierte Messspannung abgreifende Messelektrode. In einigen Ausführungen des Standes der Technik sind mindestens zwei Messelektroden vorhanden. Vorzugsweise berühren diese Messelektroden das Medium und verläuft die virtuelle Verbindungslinie der beiden Messelektroden zumindest im Wesentlichen senkrecht zur Richtung des die Messleitung senkrecht zur Längsachse der Messleitung durchsetzenden Magnetfeldes.

Zu den im Stand der Technik bekannten magnetisch-induktiven Durchflussmessgeräten wird beispielhaft verwiesen auf die DE 692 32 633 C2, die DE 199 07 864 A1, die DE 100 64 738 B4, die DE 102 43 748 A1, die DE 10 2008 005 258 A1 und DE 10 2011 112 703 A1 sowie auch auf die EP 0 704 682 A1 und die EP 0 834 057 A1. Insbesondere wird auch auf die Druckschriften verwiesen, die sich mit Problemen beschäftigen, die bei magnetisch-induktiven Durchflussmessgeräten in Verbindung mit den Messleitungen beziehungsweise mit den Messelektroden relevant sind, nämlich auf die DE 102 40 024 A1, die DE 10 2008 059 067 A1, die DE 10 2010 056 077 A1, die DE 10 2012 017 904 A1, EP 2 469 244 A1 und die DE 10 2014 001 479 A1.

Die DE 102 40 024 A1 beschreibt ein magnetisch-induktives Durchflussmessgerät, bei dem die Messleitung durch ihre Wandung hindurchführende Messelektrodenkanäle aufweist und die Messelektroden in den Messelektrodenkanälen derart angeordnet sind, dass ihr Messelektrodenkopf gegenüber der Innenwand der Messleitung zurückgezogen ist. Dabei ist vorgesehen, dass der jeweilige Innenraum der Messelektrodenkanäle vor dem Messelektrodenkopf bis zum Innenraum der Messleitung frei ist. Auf diese Weise wird ein verbessertes Signal-zu-Rausch-Verhältnis der an den Messelektroden abgreifbaren Messspannung erzielt.

Bei dem aus der DE 10 2008 059 067 A1 bekannten magnetisch-induktiven Durchflussmessgerät ist die Messleitung innen zumindest teilweise mit einer elektrisch isolierenden Deckschicht versehen. Dabei sind die Messelektroden streifenartig ausgeführt und haben eine Länge - in Umfangsrichtung der Messleitung - von etwas weniger als einem Viertel des Messleitungsumfangs bis etwas mehr als die Hälfte des Messleitungsumfangs.

Die DE 10 2010 056 077 A1 beschreibt ein magnetisch-induktive Durchflussmessgerät, bei dem die Messleitung innenwandseitig eine isolierende Auskleidung aufweist und die Messelektroden zumindest teilweise aus einem elektrisch leitfähigen Kunststoffmaterial bestehen und leitungsinnenseitig stoffschlüssig mit der Auskleidung verbunden sind.

Aus der DE 10 2012 017 904 A1 ist ein magnetisch-induktives Durchflussmessgerät bekannt, bei dem die Messleitung einen metallischen Grundkörper aufweist und der Grundkörper zumindest an der Messleitungsinnenseite mit einer thermoplastischen Deckschicht versehen ist. Dabei ist an den Durchdringungsstellen, an denen die Messelektroden die Messleitung durchdringen, zwischen der thermoplastischen Deckschicht der Messleitung und den Messelektroden eine durch Erwärmung der Deckschicht entstandene, flüssigkeitsdichte Verbindung realisiert.

Auch die Druckschriften US 5,925,830, DE 101 56 031 A1 und US 2007/0234821 A1 zeigen magnetisch-induktive Durchflussmessgeräte mit in den Messleitungen eingesetzten Messelektroden zum Abgreifen einer in dem durch die Messleitung strömenden Medium induzierten Messspannung. Die Messelektroden sind jeweils aus elektrisch leitfähigem Kunststoff hergestellt.

Schließlich ist aus der DE 10 2014 001 479 A1 ein magnetisch-induktives Durchflussmessgerät bekannt, bei dem die Messleitung für jede Messelektrode eine kreiszylindrische Durchdringungsstelle, eine an der Messleitungsaußenseite vorgesehene, an die Durchdringungsstelle anschließende Abstützfläche und mindestens ein mit Abstand zur Abstützfläche vorgesehenes Fixierelement aufweist und jede Messelektrode einen durch die Durchdringungsstelle hindurchragenden oder nur hineinragenden Elektrodenschaft und einen über den Elektrodenschaft wegragenden Elektrodenkopf aufweist.

Ausgehend vom Stand der Technik liegt der Erfindung die Aufgabe zugrunde, das bekannte magnetisch-induktive Durchflussmessgerät in Bezug auf seine Messelektrode zu verbessern. Dies bezieht sich sowohl auf ein Durchflussmessgerät als auch auf ein Verfahren zum Erzeugen einer Messelektrode, insbesondere für ein magnetisch-induktives Messgerät.

Das erfindungsgemäße magnetisch-induktive Durchflussmessgerät, bei dem die zuvor aufgezeigte Aufgabe gelöst ist, ist zunächst und im Wesentlichen dadurch gekennzeichnet, dass die Messelektrode aus einem äußeren Elektrodenmantel aus elektrisch nicht-leitfähigem Kunststoff und aus einem inneren Elektrodenkern aus elektrisch leitfähigem Kunststoff bestehen, wobei in einem ersten Verfahrensschritt der Elektrodenmantel und in einem auf den ersten Verfahrensschritt folgenden zweiten Verfahrensschritt der Elektrodenkern innerhalb des Elektrodenmantels hergestellt ist. Insgesamt besteht somit die Messelektrode zumindest teilweise aus einem elektrisch leitfähigen Kunststoff.

In einer Ausgestaltung verfügt das Durchflussmessgerät über mindestens zwei Messelektroden, die jeweils aus einem Elektrodenmantel und einem Elektrodenkern bestehen.

In einer Ausgestaltung ist der Elektrodenmantel hohlzylindrisch ausgestaltet. In einer ergänzenden oder alternativen Ausgestaltung ist der Elektrodenkern zylindrisch oder insbesondere vollzylindrisch ausgeführt.

In einer bevorzugten Ausgestaltung ist vorgesehen, dass der Elektrodenmantel aus einer elektrisch nicht-leitfähigen Variante eines Kunststoffs und der Elektrodenkern aus einer - beispielsweise durch eine geeignete Dotierung - elektrisch leitfähigen Variante des gleichen Kunststoffs bestehen. In einer alternativen Ausgestaltung werden unterschiedliche Kunststoffe verwendet.

Eine Ausführungsform ist dadurch gekennzeichnet, dass der Elektrodenmantel oder / und der Elektrodenkern durch Spritzgießen (= injection molding) hergestellt ist bzw. sind. Dabei empfiehlt es sich, einen Kunststoff mit einer relativ hohen Verarbeitungstemperatur zu verwenden. Ein solcher Kunststoff ist PEEK (PEEK = Polyetheretherketon), ein hochtemperaturbeständiger thermoplastischer Kunststoff, der zur Stoffgruppe der Polyaryletherketone gehört. PEEK ist gegen fast alle organischen und anorganischen Chemikalien beständig. Seine Schmelztemperatur beträgt 335 °C. Alternativ oder ergänzend wird der Kunststoff Polysulfon (PSU) verwendet.

Funktionsnotwendig weisen die Messelektroden einen äußeren Elektrodenanschluss auf. Ein solcher Elektrodenanschluss kann zum Beispiel stiftartig ausgeführt sein. Bei erfindungsgemäß ausgeführten Messelektroden empfiehlt es sich, den Elektrodenanschluss teilweise innerhalb des Elektrodenkerns vorzusehen, vorzugsweise mit einer Presspassung. Alternativ wird der Elektrodenanschluss direkt innerhalb einer Aussparung des Elektrodenkerns, z. B. auch über das Spritzgussverfahren aus einem passenden Material - z. B. ebenfalls aus einem elektrisch leitfähigen Kunststoff - erzeugt. In einer Ausgestaltung ist insbesondere vorgesehen, dass eine Längsachse der Messelektrode und eine Längsachse des Elektrodenanschlusses im Wesentlichen senkrecht aufeinander stehen. Sind in einer Ausgestaltung zwei Messelektroden vorgesehen, so liegen in einer Ausgestaltung die Längsachsen der zwei Messelektroden entlang der virtuellen Verbindungslinie zwischen den zwei Messelektroden. Die Längsachse der Messelektrode ist in einer Ausgestaltung durch die Längsachse des Elektrodenkerns gegeben. In einer ergänzenden oder alternativen Ausgestaltung ist die Längsachse der Messelektrode durch die Richtung gegeben, mit welcher ein auf der Mediumsseite bzw. Prozessseite der Messelektrode befindlicher Druck gegen die Messelektrode wirkt. Durch die Anordnung von Messelektrode und Elektrodenanschluss zueinander soll insbesondere die mechanische Belastung auf den Elektrodenanschluss reduziert werden für den Fall, dass mediums- oder prozessseitig Druck auf die Messelektrode einwirkt.

Zur Lehre der Erfindung gehört auch ein Verfahren zum Herstellen einer Messelektrode, die insbesondere für ein magnetisch-induktives Durchflussmessgerät der beschriebenen Art geeignet ist, wobei das Verfahren dadurch gekennzeichnet ist, dass in einem ersten Verfahrensschritt der Elektrodenmantel und in einem auf den ersten Verfahrensschritt folgenden zweiten Verfahrensschritt der Elektrodenkern innerhalb des Elektrodenmantels hergestellt wird. Dabei empfiehlt es sich, den ersten Verfahrensschritt bei einer relativ hohen Verarbeitungstemperatur durchzuführen. Dies ist beispielsweise möglich, wenn, wie weiter oben ausgeführt, der Elektrodenmantel aus PEEK besteht und folglich aus PEEK hergestellt wird. Alternativ findet Polysulfon Verwendung - einmal in elektrisch leitfähiger und einmal in elektrisch nicht-leitfähiger Form. Der Elektrodenkern wird insbesondere nicht separat hergestellt und in den Elektrodenmantel eingebracht, sondern der Elektrodenkern wird direkt im Elektrodenmantel erzeugt, so dass insbesondere der Elektrodenmantel auch die Form für den Elektrodenkern darstellt.

Das Verfahren bezieht sich dabei generell auf das Herstellen von Messelektroden zur Übertragung von elektrischen Signalen oder zum Abgreifen von elektrischen Signalen. Besonders besprochen wird jedoch die Herstellung von Messelektroden für magnetisch-induktive Durchflussmessgeräte, wobei dies jedoch keine Einschränkung für das Verfahren darstellen soll. Alternativ kann die Messelektrode auch zu einem TDR-Messgerät gehören (für Time Domain Reflectometry).

Die obigen Ausführungen und Erläuterungen hinsichtlich des Durchflussmessgeräts gelten entsprechend auch für das Verfahren bzw. gelten die Ausgestaltungen des Verfahrens entsprechend auch für das Durchflussmessgerät, welches über mindestens eine entsprechend hergestellte Messelektrode verfügt.

In einer Ausgestaltung werden bzw. wird der Elektrodenmantel und/oder der Elektrodenkern durch Spritzgießen erzeugt.

Besondere Bedeutung kommt einer bevorzugten Ausführungsform des erfindungsgemäßen Verfahrens zu, die ergänzend dadurch gekennzeichnet ist, dass der zweite Verfahrensschritt kurzfristig nach dem ersten Verfahrensschritt, vorzugsweise wenige Sekunden nach dem ersten Verfahrensschritt, durchgeführt wird. Das gibt dann auch die Möglichkeit, den zweiten Verfahrensschritt zu einem Zeitpunkt durchzuführen, zu dem der im ersten Verfahrensschritt hergestellte Elektrodenmantel noch eine relativ hohe Temperatur hat, vorzugsweise eine so hohe Temperatur, dass es zu einer molekularen Verbindung zwischen dem Elektrodenkern und dem Elektrodenmantel kommt. Damit ist dann eine gasdichte Verbindung zwischen dem Elektrodenmantel und dem Elektrodenkern sichergestellt und, wenn die erfindungsgemäßen Messelektroden insgesamt gasdicht in die Messleitung eingebracht sind, ein gasdichter Abschluss der Messleitung im Bereich der Messelektroden.

Somit ist in einer Ausgestaltung, die insbesondere auf die Verbindung zwischen Elektrodenmantel und Elektrodenkern abzielt, vorgesehen, dass der zweite Verfahrensschritt zu einem Zeitpunkt nach dem ersten Verfahrensschritt durchgeführt wird, dass es zu einer molekularen Verbindung zwischen dem Elektrodenkern und dem Elektrodenmantel kommt. Der Elektrodenmantel weist hierfür vorzugsweise eine noch ausreichend hohe Temperatur für die Verbindung mit dem Material des Elektrodenkerns auf.

In einer Ausgestaltung wird im ersten Verfahrensschritt der Elektrodenmantel mit mindestens einer solchen Strukturkomponente hergestellt, die im zweiten Verfahrensschritt eine gasdichte Verbindung mit dem Elektrodenkern eingeht. In einer Variante wird die Strukturkomponente zumindest teilweise treppenartig realisiert. In einer Ausgestaltung ist die Strukturkomponente des Elektrodenmantels in Art eines Hinterschnitts oder einer Hinterschneidung ausgeführt, so dass sich die Treppenform ausgehend von der Stirnseite der Messelektrode, die im eingebauten Zustand dem Innenraum der Messleitung zugewandt ist, radial weiter nach außen erstreckt. In einer Ausgestaltung ist die Strukturkomponente zumindest teilweise so ausgestaltet, dass sie allein oder auch bedingt durch das Einbringen des Materials des Elektrodenkerns bzw. durch dessen Temperatur schmilzt und eine Verbindung mit dem Elektrodenkern eingeht. Die Strukturkomponente ist daher in einer Ausgestaltung entsprechend dünn, so dass sie beim zweiten Verfahrensschritt zumindest teilweise schmilzt.

Für die Erzeugung von Elektrodenmantel und Elektrodenkern wird insbesondere ein Mehrkomponenten-Spritzgießverfahren bzw. insbesondere ein twoshot injection moulding Verfahren verwendet. Dies ist insbesondere kostensparend und ermöglicht eine gasdichte Verbindung. Die zwei Komponenten sind dabei vorzugsweise - wie oben ausgeführt - der gleichen Kunststoff, der sich nur jeweils hinsichtlich seiner elektrischen Leitfähigkeit unterscheidet.

In einer Ausgestaltung ist für die elektrische Kontaktierung des Elektrodenkerns vorgesehen, dass der Elektrodenkern mit einer Aussparung für einen Elektrodenanschluss hergestellt wird oder dass in dem Elektrodenkern eine Aussparung für einen Elektrodenanschluss erzeugt wird. In einer Variante wird der Elektrodenkern mit einer Aussparung hergestellt und einer anderen Variante wird in den bereits erzeugten Elektrodenkern eine Aussparung eingebracht. Dabei stehen vorzugsweise die Längsachsen von Elektrodenkern und Aussparung aufeinander senkrecht.

In einer davon ausgehenden Ausgestaltung wird der Elektrodenanschluss in der Aussparung hergestellt oder wird der Elektrodenanschluss in die Aussparung eingebracht. In der ersten Variante ist die Aussparung im Elektrodenkern vorzugsweise auch eine Form für den Elektrodenanschluss.

In einer weiteren Ausgestaltung wird der Elektrodenanschluss in der Aussparung so hergestellt oder wird der Elektrodenanschluss in die Aussparung so eingebracht, dass eine Längsachse der Messelektrode und eine Längsachse des Elektrodenanschlusses im Wesentlichen senkrecht aufeinander stehen. Zu der Beschreibung der Längsachsen gehören insbesondere die obigen Ausführungen.

Wie zuvor im Einzelnen dargelegt, gibt es verschiedene Möglichkeiten, das erfindungsgemäße magnetisch-induktive Durchflussmessgerät auszugestalten und weiterzubilden, was auch in Bezug auf das erfindungsgemäße Verfahren gilt. Dazu wird verwiesen auf die Patentansprüche sowie auf die nachfolgende Beschreibung in Verbindung mit der Zeichnung. In der Zeichnung zeigen
- Fig. 1: eine perspektivische Darstellung einer zu einem erfindungsgemäßen magnetisch-induktiven Durchflussmessgerät gehörenden Messleitung,
- Fig. 2: einen Schnitt durch eine schematische Darstellung eines magnetisch-induktiven Durchflussmessgeräts,
- Fig. 3: einen Schnitt durch eine schematische Darstellung einer einzelnen Messelektrode und
- Fig. 4: in sehr stark vergrößertem Maßstab, einen Schnitt durch eine zu einem magnetisch-induktiven Durchflussmessgerät gehörende Messleitung.

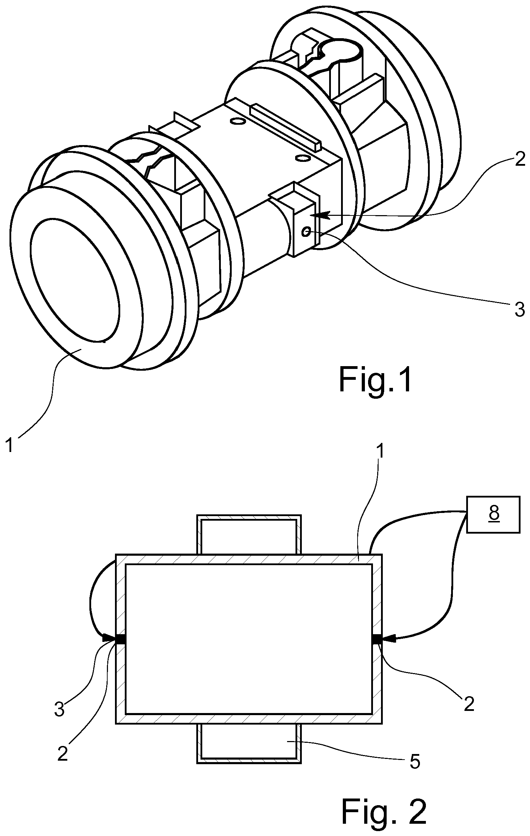

Zu dem beispielhaft dargestellten magnetisch-induktiven Durchflussmessgerät (siehe Fig. 1 und 2) gehören eine Messleitung 1, durch die das Medium strömt, dessen Durchfluss gemessen werden soll, eine Magnetfelderzeugungseinrichtung 5 zur Erzeugung eines die Messleitung 1 wenigstens teilweise durchsetzenden Magnetfeldes, (in dem dargestellten Beispiel) zwei Messelektroden 2 zum Abgreifen einer in dem strömenden Medium induzierten Messspannung und eine Auswerteeinheit 8.

Bei den magnetisch-induktiven Durchflussmessgeräten ist realisiert, dass die Messelektroden 2 aus einem äußeren Elektrodenmantel 6 aus elektrisch nicht-leitfähigem Kunststoff und aus einem inneren Elektrodenkern 7 aus elektrisch leitfähigem Kunststoff bestehen. Vorzugsweise ist dabei ergänzend realisiert, dass der Elektrodenmantel 6 und der Elektrodenkern 7 durch Spritzgießen (=injection molding) hergestellt sind. Dabei ist für den Elektrodenmantel 6 und den Elektrodenkern 7 ein Kunststoff mit einer relativ hohen Verarbeitungstemperatur verwendet. Insbesondere handelt es sich jeweils um den gleichen Kunststoff, der einmal elektrisch leitend - für den Elektrodenkern 7 - und einmal elektrisch nicht-leitend - für den Elektrodenmantel 6 - ausgeführt ist. Konkret ist für den Elektrodenmantel 6 und den Elektrodenkern 7 als Kunststoff PEEK (PEEK= Polyetheretherketon) verwendet. Alternativ wird beispielsweise das Material Polysulfon (PSU) verwendet.

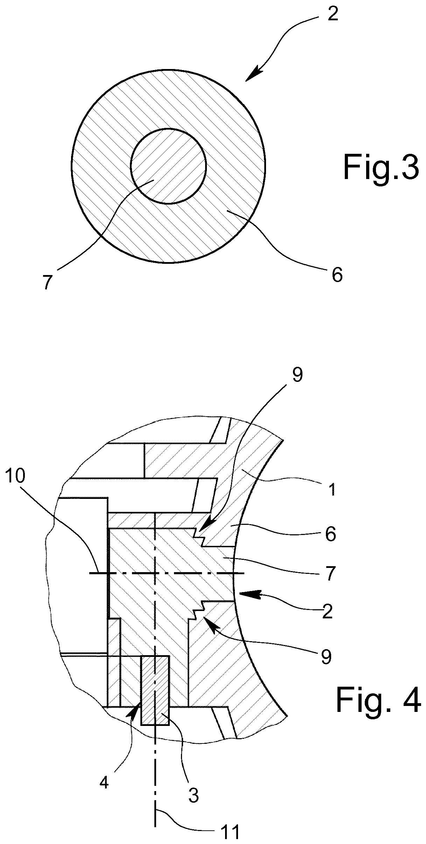

Die Ausführung einer Messelektrode 2 mit einem Elektrodenmantel 6 in Form eines einen kreisförmigen Querschnitt aufweisenden Hohlzylinders und mit einem ebenfalls zylindrischen Elektrodenkern 7 zeigt die Fig. 3.

Die Messelektroden 2 weisen ergänzend einen äußeren Elektrodenanschluss 3 auf. Dieser Elektrodenanschluss 3 ist teilweise innerhalb des Elektrodenkerns 7 vorgesehen, vorzugsweise mit Presspassung. In Fig. 4 weist der Elektrodenkern 7 eine zylindrische Ausnehmung 4 auf. In einer alternativen Ausgestaltung wird der Elektrodenanschluss 3 ebenfalls durch ein Spritzgussverfahren in der Ausnehmung 4 der Messelektrode 2 bzw. speziell des Elektrodenkerns 7 erzeugt. Die Längsachse 11 der Ausnehmung 4 verläuft dabei - unabhängig vom Herstellungs- bzw. Befestigungsverfahren - insbesondere senkrecht zur Längsachse 10 der Messelektrode 2.

Fig. 4 zeigt eine nicht erfindungsgemäße Ausgestaltung eines magnetisch-induktiven Durchflussmessgerätes. Gleichwohl sind in der Fig. 4 Merkmale offenbart, die mit dem erfindungsgemäßen magnetisch-induktiven Durchflussmessgerät verwirklicht werden können. In der Fig. 4 bildet die Messleitung 1 den Elektrodenmantel 6 zur Aufnahme und zur Ausformung des Elektrodenkerns 7, was nicht unter die Erfindung fällt. Der Elektrodenmantel 6 verfügt über eine treppen- oder absatzartige Strukturkomponente 9, die für eine druckdichte Verbindung zwischen Elektrodenmantel 6 und -kern 7 sorgt. Die Strukturkomponente 9 des Elektrodenmantels 6 ragt im dargestellten Beispiel mit zwei zackenartigen umlaufenden Dichtlippen in den Elektrodenkern 7 hinein.

## Patentansprüche

1. Magnetisch-induktives Durchflussmessgerät zur Durchflussmessung eines strömenden Mediums, mit einer Messleitung (1), mit einer Magnetfelderzeugungseinrichtung (5) zur Erzeugung eines die Messleitung (1) wenigstens teilweise durchsetzenden Magnetfeldes und mit mindestens einer Messelektrode (2) zum Abgreifen einer in dem strömenden Medium induzierten Messspannung,
**dadurch gekennzeichnet,**
**dass** die Messelektrode (2) aus einem äußeren Elektrodenmantel (6) aus elektrisch nicht-leitfähigem Kunststoff und aus einem inneren Elektrodenkern (7) aus elektrisch leitfähigem Kunststoff besteht, wobei in einem ersten Verfahrensschritt der Elektrodenmantel (6) und in einem auf den ersten Verfahrensschritt folgenden zweiten Verfahrensschritt der Elektrodenkern (7) innerhalb des Elektrodenmantels (6) hergestellt ist.

2. Magnetisch-induktives Durchflussmessgerät nach Anspruch 1, **dadurch gekennzeichnet, dass** die Messelektrode (2) einen äußeren Elektrodenanschluss (3) aufweist, wobei eine Längsachse (10) der Messelektrode (2) und eine Längsachse (11) des Elektrodenanschlusses (3) im Wesentlichen senkrecht aufeinander stehen.

3. Verfahren zum Herstellen einer Messelektrode (2), insbesondere für ein magnetisch-induktives Durchflussmessgerät,
**dadurch gekennzeichnet,**
**dass** in einem ersten Verfahrensschritt - insbesondere durch Spritzgießen - ein Elektrodenmantel (6) und in einem auf den ersten Verfahrensschritt folgenden zweiten Verfahrensschritt - insbesondere durch Spritzgießen - ein Elektrodenkern (7) innerhalb des Elektrodenmantels (6) hergestellt wird.

4. Verfahren nach Anspruch 3, **dadurch gekennzeichnet, dass** im ersten Verfahrensschritt der Elektrodenmantel (6) mit einer solchen Strukturkomponente (9) hergestellt wird, die im zweiten Verfahrensschritt eine gasdichte Verbindung mit dem Elektrodenkern (7) eingeht.

5. Verfahren nach Anspruch 4, **dadurch gekennzeichnet, dass** die Strukturkomponente (9) zumindest teilweise treppenartig realisiert wird.

6. Verfahren nach einem der Ansprüche 3 bis 5, **dadurch gekennzeichnet, dass** der zweite Verfahrensschritt zu einem solchen Zeitpunkt nach dem ersten Verfahrensschritt durchgeführt wird, dass es zu einer molekularen Verbindung zwischen dem Elektrodenkern (7) und dem Elektrodenmantel (6) kommt.

7. Verfahren nach einem der Ansprüche 3 bis 6, **dadurch gekennzeichnet, dass** der Elektrodenkern (7) mit einer Aussparung (4) für einen Elektrodenanschluss (3) hergestellt wird oder dass in dem Elektrodenkern (7) eine Aussparung (4) für einen Elektrodenanschluss (3) erzeugt wird.

8. Verfahren nach Anspruch 7, **dadurch gekennzeichnet, dass** der Elektrodenanschluss (3) in der Aussparung (4) so hergestellt wird oder dass der Elektrodenanschluss (3) in die Aussparung (4) so eingebracht wird, dass eine Längsachse (10) der Messelektrode (2) und eine Längsachse (11) des Elektrodenanschlusses (3) im Wesentlichen senkrecht aufeinander stehen.

## Claims

1. Magnetic-inductive flowmeter for measuring the flow of a flowing medium, having a measuring tube (1), having a magnetic field generator (5) for generating a magnetic field at least partially interfusing the measuring tube (1), and having at least one measuring electrode (2) for tapping a measuring voltage induced in the flowing medium,
**characterized in**
**that** the measuring electrode (2) consists of an outer electrode sheath (6) of electrically non-conductive plastic and of an inner electrode core (7) of electrically conductive plastic, wherein the electrode sheath (6) is produced in a first process step and the electrode core (7) is produced within in the electrode sheath (6) in a second process step following the first process step.

2. Magnetic-inductive flowmeter according to claim 1, **characterized in that** the measuring electrode (2) has an outer electrode connection (3), wherein a longitudinal axis (10) of the measuring electrode (2) and a longitudinal axis (11) of the electrode connection (3) are essentially perpendicular to one another.

3. Method for producing a measuring electrode (2), in particular for a magnetic-inductive flowmeter,
**characterized in**
**that** the electrode sheath (6) is produced - in particular by injection molding - in a first process step and the electrode core (7) is produced - in particular by injection molding - within in the electrode sheath (6) in a second process step following the first process step.

4. Method according to claim 3, **characterized in that** the electrode sheath (6) is produced with a structure component (9) in the first process step that forms a gas-tight connection with the electrode core (7) in the second process step.

5. Method according to claim 4, **characterized in that** the structure component (9) is implemented at least partially in a step-like manner.

6. Method according to any one of claims 3 to 5, **characterized in that** the second process step is carried out at such a point in time after the first process step, that a molecular bond occurs between the electrode core (7) and the electrode sheath (6).

7. Method according to any one of claims 3 to 6, **characterized in that** the electrode core (7) is produced with a recess (4) for an electrode connection (3) or that a recess (4) for an electrode connection is created in the electrode core (7).

8. Method according to claim 7, **characterized in that** the electrode connection (3) is produced in the recess (4) or that the electrode connection (3) is inserted in the recess (4) so that a longitudinal axis (10) of the measuring electrode (2) and a longitudinal axis (11) of the electrode connection (3) are essentially perpendicular to one another.

## Revendications

1. Débitmètre magnéto-inductif permettant de mesurer le débit d'un fluide en écoulement, comprenant une conduite de mesure (1), un dispositif de génération de champ magnétique (5) pour générer un champ magnétique traversant au moins partiellement la conduite de mesure (1), et au moins une électrode de mesure (2) pour prélever une tension de mesure induite dans le fluide en écoulement,
**caractérisé en ce que** l'électrode de mesure (2) est composée d'une enveloppe d'électrode extérieure (6) en matière plastique électriquement non conductrice et d'un noyau d'électrode intérieur (7) en matière plastique électriquement conductrice, dans lequel l'enveloppe d'électrode (6) est fabriquée dans une première étape de procédé, et le noyau d'électrode (7) est fabriqué à l'intérieur de l'enveloppe d'électrode (6) dans une deuxième étape de procédé consécutive à la première étape de procédé.

2. Débitmètre magnéto-inductif selon la revendication 1, **caractérisé en ce que** l'électrode de mesure (2) présente une borne d'électrode extérieure (3), un axe longitudinal (10) de l'électrode de mesure (2) et un axe longitudinal (11) de la borne d'électrode (3) étant substantiellement perpendiculaires l'un par rapport à l'autre.

3. Procédé de fabrication d'une électrode de mesure (2), en particulier pour un débitmètre magnéto-inductif,
**caractérisé en ce qu'**une enveloppe d'électrode (6) est fabriquée, en particulier par moulage par injection, dans une première étape de procédé, et un noyau d'électrode (7) est fabriqué, en particulier par moulage par injection, à l'intérieur de l'enveloppe d'électrode (6) dans une deuxième étape de procédé consécutive à la première étape de procédé.

4. Procédé selon la revendication 3, **caractérisé en ce que** l'enveloppe d'électrode (6) est fabriquée dans la première étape de procédé avec une composante structurelle (9) telle qu'elle établit une liaison étanche au gaz avec le noyau d'électrode (7) dans la deuxième étape de procédé.

5. Procédé selon la revendication 4, **caractérisé en ce que** la composante structurelle (9) est réalisée au moins partiellement en gradins.

6. Procédé selon l'une quelconque des revendications 3 à 5, **caractérisé en ce que** la deuxième étape de procédé est effectuée à un instant après la première étape de procédé tel qu'une liaison moléculaire se forme entre le noyau d'électrode (7) et l'enveloppe d'électrode (6).

7. Procédé selon l'une quelconque des revendications 3 à 6, **caractérisé en ce que** le noyau d'électrode (7) est fabriqué avec un évidement (4) pour une borne d'électrode (3), ou **en ce qu'**un évidement (4) pour une borne d'électrode (3) est pratiqué dans le noyau d'électrode (7).

8. Procédé selon la revendication 7, **caractérisé en ce que** la borne d'électrode (3) dans l'évidement (4) est fabriquée de telle sorte, ou **en ce que** la borne d'électrode (3) est introduite dans l'évidement (4) de telle sorte qu'un axe longitudinal (10) de l'électrode de mesure (2) et un axe longitudinal (11) de la borne d'électrode (3) sont substantiellement perpendiculaires l'un à l'autre.
